# EUROPÄISCHE PATENTSCHRIFT

(11) **EP 0 580 900 B1**
(45) Veröffentlichungstag und Bekanntmachung des Hinweises auf die Patenterteilung: **03.12.1997**
(21) Anmeldenummer: 92250199.4
(22) Anmeldetag: 31.07.1992
(51) Int. Cl.: B41B 19/00, G06K 15/02

(54) **Verfahren zum Ausgeben von Schrift auf hochauflösenden Ausgabegeräten**
Method for outputting characters on high-resolution output apparatus
Méthode pour sortir des caractères sur un appareil de sortie à haute résolution

(43) Veröffentlichungstag der Anmeldung: 02.02.1994
(73) Patentinhaber: ADOBE SYSTEMS INCORPORATED, Mountain View California 94039-7900 (US)
(72) Erfinder: Karow, Peter, Dr., W-2000 Hamburg 65 (DE)
(74) Vertreter: UEXKÜLL & STOLBERG

(56) Entgegenhaltungen:
- EP-A- 0 453 124
- PATENT ABSTRACTS OF JAPAN vol. 16, no. 427 (P-1416)8. September 1992 & JP-A-41 46 484 (RICOH CO LTD) 20.Mai 1992
- PATENT ABSTRACTS OF JAPAN vol. 16, no. 371 (P-1399)10. August 1992 & JP-A-41 16 594 (RICOH CO LTD) 17. April 1992
- PATENT ABSTRACTS OF JAPAN vol. 16, no. 345 (P-1392)27. Juli 1992 &JP-A-41 04 298 (FUJI XEROX CO LTD) 6.April 1992

## Beschreibung

Die Erfindung betrifft ein Verfahren zum Ausgeben von Schrift auf hochauflösenden Ausgabegeräten nach dem Oberbegriff des Patentanspruchs 1 bzw. des Patentanspruchs 9.

Solche hochauflösende Ausgabegeräte sind zum Beispiel elektronische Lichtsatzmaschinen oder hochauflösende Laserdrucker. Diese Geräte enthalten eine eigene Rechnereinheit, die den auszugebenden Text als solchen beispielsweise von einem externen Computer empfängt und unter Verwendung digital gespeicherter Schriften in eine vorgegebene Schriftform von bestimmtem Schrifttyp und bestimmter Schriftgröße umsetzt. Dabei kann auch ein Randausgleich berücksichtigt werden. Die von der Rechnereinheit ausgegebenen Daten enthalten die vollständige Information über das Schriftbild und werden einem Zwischenspeicher zugeführt, der zur Ansteuerung einer Ausgabeeinheit dient, die die Daten zum Beispiel mit Hilfe eines Laserstrahls auf ein Vervielfältigungsmedium wie einen Film oder Papier überträgt.

Die Schriftgröße wird in einer typographischen Einheit gemessen, die mit Punkt (pt) bezeichnet wird, und es ist: 1 pt = 0,375 mm. Früher wurden alle verschiedenen Punktgrößen einer Schrift gesondert hergestellt. Die Stempel der Buchstaben wurden mit der Hand erzeugt und dienten zur Herstellung der Matritzen. Mit diesen konnte dann in den Setzmaschinen das Buchstabenbild auf Zeilen aus gegossenem Blei übertragen werden. Später kam zu dieser Bleisatztechnik der Fotosatz hinzu, der die Vergrößerung oder Verkleinerung von Buchstaben in linearer Weise ermöglichte. Damit brauchte man eine Schrift nur noch in einer Größe als Master (Normalgröße oder Designgröße) herzustellen und konnte unterschiedliche gewünschte Schriftgrößen durch lineare Skalierung in der Fotosatzmaschine erzeugen. Dieser Weg, nur noch einen Master herzustellen, verbreitete sich aus Kostengründen allgemein in der graphischen Industrie.

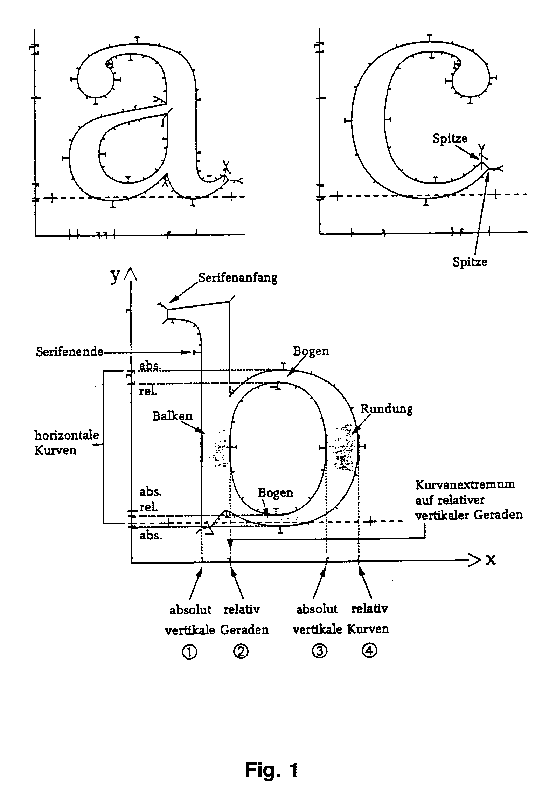

In den letzten Jahren ist die Fotosatztechnik durch computergesteuerte Lichtsatztechnik abgelöst worden. Die Schriften werden digitalisiert gespeichert, wobei sich heute die Außenlinienkodierung weitgehend durchgesetzt hat, bei der die Konturen oder Ränder eines Buchstabens durch diskrete Kontrollpunkte und verbindende Kurvenelemente beschrieben werden, wie in Figur 1 dargestellt. Als Punkte werden beispielsweise die X-, Y-Koordinaten von Start-, Eck-, Kurven- und Tangentenpunkten digitalisiert und die Kurvenelemente werden von den verschiedenen Herstellern als Geraden und Kreise, Bezier-Funktionen, als Spiralen oder als Spline-Funktionen beschrieben. Eine Übersicht über die digitalen Schriftformate ist in dem Buch "Digitale Schriften", Peter Karow, Springer Verlag, Berlin Heidelberg, 1992, zu finden. Auch bei den digital gespeicherten Schriften wird heute lediglich ein Master für jeden Schrifttyp verwendet und diese je nach der gewünschten Größe umskaliert, sowohl für niedrig auflösende Drucker als auch für hochauflösende Lichtsatzmaschinen. Eine niedrige Auflösung beträgt beispielsweise 100 Zeilen pro Zoll (lines per inch = lpi) im Fall von Bildschirmgeräten und bis 300 lpi bei Nadeldruckern oder Laserprintern. Die Hochauflösung beträgt etwa 2500 lpi bei elektronischen Lichtsatzanlagen. Das bedeutet zum Beispiel, daß Schrift in Textgröße 9 pt auf Bildschirmen eine Strichstärke von nur einem Bildpunkt (Pixel) hat, während andererseits die gleiche Strichstärke bei Hochauflösung von 25 Pixeln gebildet wird.

Neben den Kontrollpunkten zur Definition der Umrißlinie enthalten die Buchstaben sogenannte Instruktionen, die bei der Rasterung für die Ausgabe des Buchstabens beispielsweise auf einem Laserdrucker oder einem Bildschirm verwendet werden und heute von allen Herstellern digitaler Schriften zum "intelligenten Rastern" (Intelligent Font Scaling) angewendet werden (vgl. z.B. "Intelligent FontScaling" von Peter Karow oder Peter Karow, "Intelligent Font Scaling - Die Technik des Umgrößerns von Schriften", Hamburger Satzspiegel, Hamburg 3/1990).

Die heute verwendete lineare Umskalierung digital gespeicherter Schriften ist in verschiedener Hinsicht aber immer noch unbefriedigend. Die durch lineare Vergrößerung/Verkleinerung aus einem Master hergestellten Schriftgrößen sind im Hinblick auf ihre Lesbarkeit und den ästhetischen Gesamteindruck den optisch richtig und typographisch passend hergestellten Schriftgrößen eindeutig unterlegen. Das typographisch richtige "Optische Skalieren" (englisch: Optical Scaling), wie es früher bei der gesonderten Herstellung der Schriftgrößen ohne weitere Überlegung und Regeln angewendet wurde, berücksichtigt, daß das Auflösungsvermögen des menschlichen Auges begrenzt ist. Wir brauchen bei klein gedrucktem Text (z.B. 5 pt) größere Buchstabenabstände als bei normalen Buchtexten (z.B. 9 pt), damit die Buchstaben nicht zusammenwachsen und die kleinen Texte noch lesbar bleiben. Das gleiche gilt für kleine weiße Innenräume wie im Kleinbuchstaben e. Sehr dünne Striche (z.B. Zierlinen, sogenannte Haarstriche) müssen bei kleinen Schriftgrößen verstärkt werden, damit sie überhaupt erkennbar bleiben und nicht schon durch den Druckprozeß "durchbrechen", d.h. teilweise verschwinden. Geht man umgekehrt zu großer Beschriftung über (Werbung, Plakate, Titel), können die Buchstaben durchaus relativ eng zusammengestellt werden, Innenräume klein bleiben und Haarlinien dünn sein. Dies läßt sich, wenn man von einem Master in der Designgröße der Schrift ausgeht, etwa folgendermaßen zusammenfassen:

Je kleiner die Schriftgröße wird,
1) desto weiter der Satz,
2) desto offener (breiter) die Buchstaben und
3) desto stärker die Strichführung.

Je größer die Schriftgröße wird,
1) desto enger der Satz,
2) desto schmaler können die Buchstaben sein und
3) desto feiner können insbesondere die Haarstriche sein.

Zur optischen Skalierung digital gespeicherter Schriften gibt es bislang erst wenige Ansätze. Im Jahre 1990 hat Henry Schneiker von der Firma Kingsley/ATF, Tucson, Arizona, am Rochester-Institut of Technology einen Vortrag über "Type Quality vs. Typ Technology" gehalten. Er schlägt vor, Schriften zu digitalisieren und dann interaktiv am Bildschirm die bei ATF für den Bleisatz angewendeten Konzepte für das "Optical Scaling" auch an digitalen Schriften anzuwenden. Er geht dabei davon aus, daß die Erzeugung nach wie vor - zwar computergestützt - Handarbeit ist.

Im März 1991 hat die Firma Adobe Systems, Kalifornien, ein Konzept namens "Multiple Master" angekündigt. Im Zusammenhang damit wird zum ersten Mal ein automatisches Verfahren zum optischen Skalieren dargestellt und erklärt. Es werden zwei Master-Schriften benötigt, eine in einer sehr kleinen Punktgröße, und die andere in einer sehr großen Punktgröße. Die dazwischenliegenden Punktgrößen werden durch lineare mathematische Interpolation errechnet.

Desweiteren spielt für den typographisch richtigen Satz das Problem des Expandierens/Kondensierens (Verbreitern/Verschmälern) eine Rolle. Bis zur Erfindung der Fotosatztechnik konnte im Maschinensatz für Druckschriften dieser Bedarf nur durch das Angebot expandierter bzw. kondensierter Schriften befriedigt werden. Diese breiteren bzw. schmaleren Varianten einer Druckschrift mußten durch teure Handarbeit gefertigt werden. Deshalb wurden sie aus Kostengründen für die meisten Schriften nicht hergestellt und angeboten. Mit der modernen Fotosatztechnik wurde das Problem des Expandierens/Kondensierens mit Hilfe von zylindrischen Spiegeln bzw. Linsen gelöst. Ebenso konnten die etwas später erfundenen elektronischen Lichtsatzmaschinen dieses Problem durch einfaches lineares Verbreitern und Verschmälern der Buchstaben handhaben. Dabei wurden die Buchstaben im Ganzen, d.h. sowohl die schwarzen Buchstabenstriche als auch die weißen Innenräume in den Buchstaben und zwischen ihnen im gesetzten Wort linear verbreitert bzw. verschmälert.

Mit dem IKARUS-System verfolgt die Firma URW seit 1975 ein Verfahren, bei dem halbautomatisch die Buchstaben typographisch richtig expandiert/kondensiert werden können. Mit Hilfe von Schutzzonen wird dem IKARUS-System mitgeteilt, welche vertikalen Gebiete eines Buchstabens starr zu halten und welche bezüglich ihrer Breite variabel sind. Dieses Verfahren läßt sich nicht voll automatisieren, es verbleibt immer ein Rest von Bildschirmarbeit für den Schriftentwerfer. Ab 1981 hat die Firma URW angefangen, das Verfahren des linearen mathematischen Interpolierens zum Zwecke des Kondensierens/Expandierens anzuwenden.

Ebenso wird von der Firma Adobe Systems, Kalifornien, mit dem Konzept des "Multiple Masters" das Interpolieren für den Zweck des automatischen Expandierens/Kondensierens eingesetzt. Dabei werden immer zwei Schriften als Master benötigt, eine schmale (condensed) und eine breite (expanded). Das hat die gravierenden Nachteile, daß nicht nur die doppelte Arbeit bei der Schriftherstellung notwendig ist, sondern auch der doppelte Speicherplatz für Schriften in den Lichtsatzmaschinen erforderlich ist.

In Zeitungen und Büchern werden Texte in der Regel "ausgeschlossen" angeboten, d.h. alle Zeilen haben die Länge der Spaltenbreite für Kolumnen. Zunächst liegt der Text in einem Flattersatz vor, wie das in Figur 15 dargestellt ist. Traditionell werden nun die Wortzwischenräume so erweitert, daß die Zeilen wie in Figur 16 gleich lang werden. Dies hat den Nachteil, daß immer wieder große Wortlücken entstehen, die den Lesefluß hemmen. Die Technik des automatischen linearen Expandierens/Kondensierens kann ebenfalls angewandt werden, führt aber zu scheinbar betonten (expandiertem = gesperrtem) bzw. nebensächlichen (kondensierten = kleingedruckten) Textstellen, wie aus Figur 17 deutlich wird, weshalb dieses Verfahren kaum angewendet wird. Man kann diese Nachteile überwinden, indem man die Buchstaben typographisch richtig expandiert bzw. kondensiert. Dabei dürfen gemäß Figur 18 nur die Innenräume, nicht aber die Strichstärken verändert werden. Wird mit solchermaßen expandierten/kondensierten Buchstaben Text ausgeschlossen, treten nicht mehr die Effekte durch zu große Lücken oder ungewollte Hervorhebungen auf, wie aus Figur 19 erkennbar ist, sondern es entsteht eine typographisch gewünschte Lösung für den anspruchsvollen Kolumnensatz.

Es ist Aufgabe der Erfindung, ein Verfahren zum Ausgeben von Schrift auf hochauflösenden Ausgabegeräten, wie hochauflösenden Druckern und elektronischen Lichtsatzmaschinen, anzugeben, mit dem ausgehend von einer einzigen digital gespeicherten Master-Schrift verschiedene Schriftgrößen typographisch richtig automatisch erzeugt werden können, um eine bessere Lesbarkeit zu erreichen.

Gemäß einem Aspekt ist es Aufgabe der Erfindung, ein automatisierbares Verfahren zu schaffen, bei dem verschiedene Schriftgrößen ausgehend von einer einzigen Master-Schrift unter Beachtung der optischen Skalierung erzeugt werden.

Gemäß einem weiteren Aspekt ist es Aufgabe der Erfindung, ein automatisierbares Verfahren zu schaffen, bei dem Schriften typographisch richtig expandiert und kondensiert werden.

Gemäß der vorliegenden Erfindung werden in einem Verfahren zum Ausgeben von Schrift auf hochauflösenden Ausgabegeräten, wie insbesondere Lichtsatzmaschinen, welche eine Rechnereinheit, einen Zwischenspeicher für die auszugebenden Schriftdaten und eine Ausgabeeinheit, die die aus dem Zwischenspeicher übernommenen Daten direkt auf ein Vervielfältigungsmedium überträgt, aufweisen, wobei die Rechnereinheit eine digital gespeicherte Schrift vor der Weitergabe an den Zwischenspeicher nach einem verfahren optisch skaliert, bei dem die Schritte vorgesehen sind:
Bereitstellen einer einzigen Master-Schrift in einer digitalisierten Außenlinienkodierung, bei der jeder Buchstabe mit einer Mehrzahl seine Kontur festlegenden diskreten Kontrollpunkten und zusätzlich mit Instruktionen, wie sie für das "Intelligent Font Scaling" vorgeschrieben sind, versehen ist,
lineares Umskalieren der Master-Schrift mit einem Faktor auf die gewünschte Punktgröße,
erfindungsgemäß die Instruktionen verwendet, um die Strichstärke der mit dem Faktor linear umskalierten Buchstaben in einer ersten vorgegebenen Abhängigkeit von dem Faktor kontinuierlich zu variieren, wobei die Strichstärke für Faktoren kleiner eins um einen durch die vorgegebene Abhängigkeit vorgegebenen Prozentsatz erhöht und für Faktoren größer eins um einen durch die vorgegebene Abhängigkeit vorgegebenen Prozentsatz verringert wird.

In einem weiteren Aspekt der Erfindung werden in einem Verfahren zum Ausgeben von Schrift auf hochauflösenden Ausgabegeräten, wie insbesondere Lichtsatzmaschinen, welche eine Rechnereinheit, einen Zwischenspeicher für die auszugebenden Schriftdaten und eine Ausgabeeinheit, die die aus dem Zwischenspeicher übernommenen Daten direkt auf ein Vervielfältigungsmedium überträgt, aufweisen, wobei die Rechnereinheit eine digital gespeicherte Schrift vor der Weitergabe an den Zwischenspeicher nach einem Verfahren expandiert und kondensiert, bei dem die Schritte vorgesehen sind:
Bereitstellen einer einzigen Master-Schrift in einer digitalisierten Außenlinienkodierung, bei der jeder Buchstabe mit einer Mehrzahl seine Kontur festlegenden diskreten Kontrollpunkten und zusätzlich mit Instruktionen, wie sie für das "Intelligent Font Scaling" vorgeschrieben sind, versehen ist,
lineares Expandieren oder Kondensieren der Master-Schrift mit einem Faktor auf die gewünschte Breite,
erfindungsgemäß die Instruktionen verwendet, um die Strichstärke beim linearen Expandieren oder Kondensieren der Buchstaben konstant zu halten und auf diese Weise nur die Innenräume zu verbreitern oder zu verschmälern.

Die Erfindung wird im folgenden anhand von Ausführungsbeispielen in den Figuren erläutert. Es zeigen:
- Figur 1: Buchstaben, auf deren Außenlinien Punkte zur digitalen Speicherung dargestellt sind;

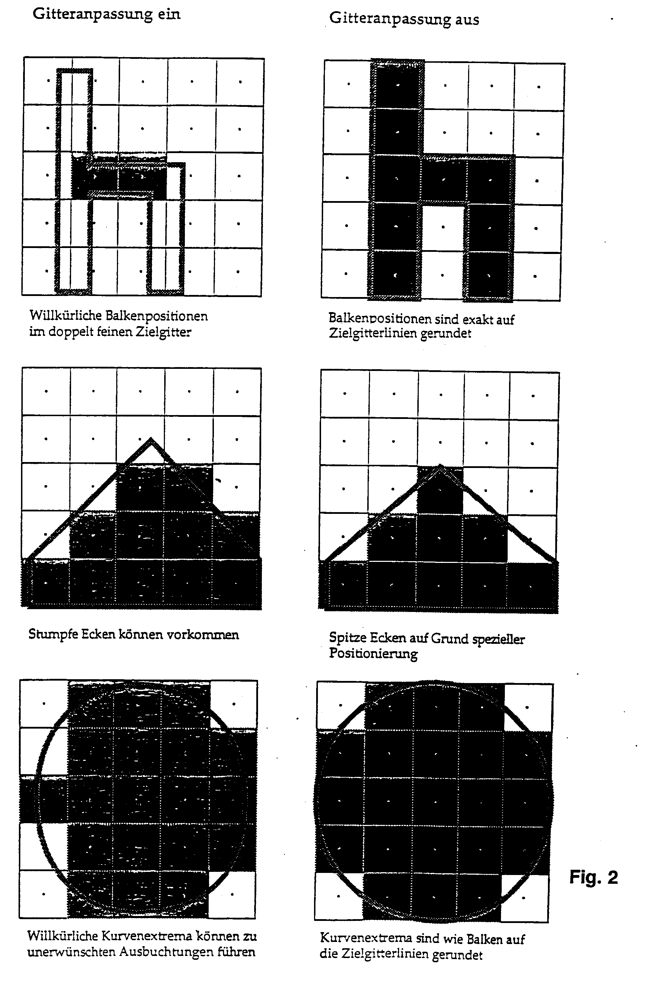

- Figur 2: Rasterungen von verschiedenen Formelementen mit und ohne Gitteranpassung;

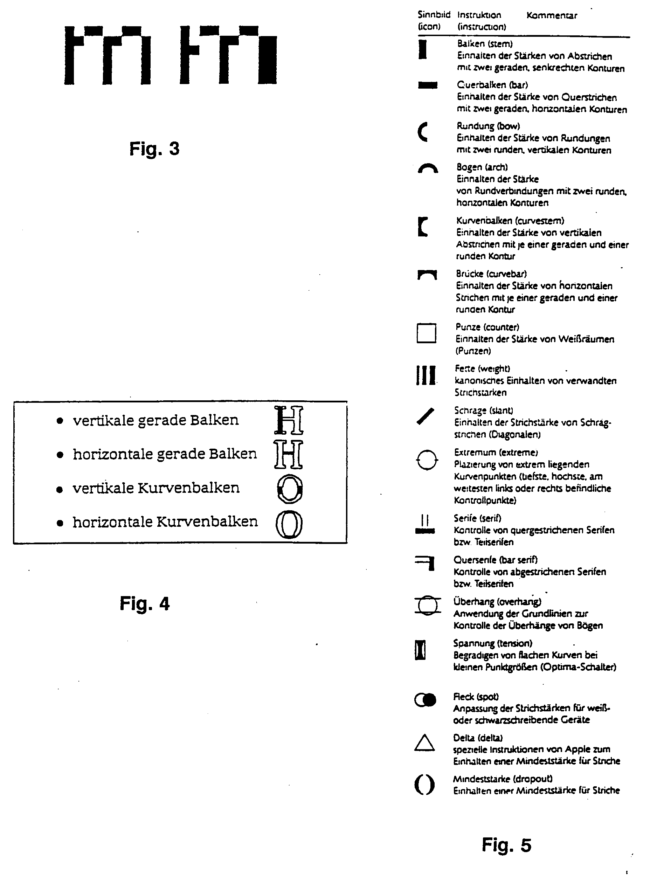

- Figur 3: unterschiedliche Rasterungen zweier Buchstaben aufgrund geringer Verschiebung des Gitters;
- Figur 4 und 5: beschreibende Elemente einer Schrift, die durch Instruktionen definiert werden;

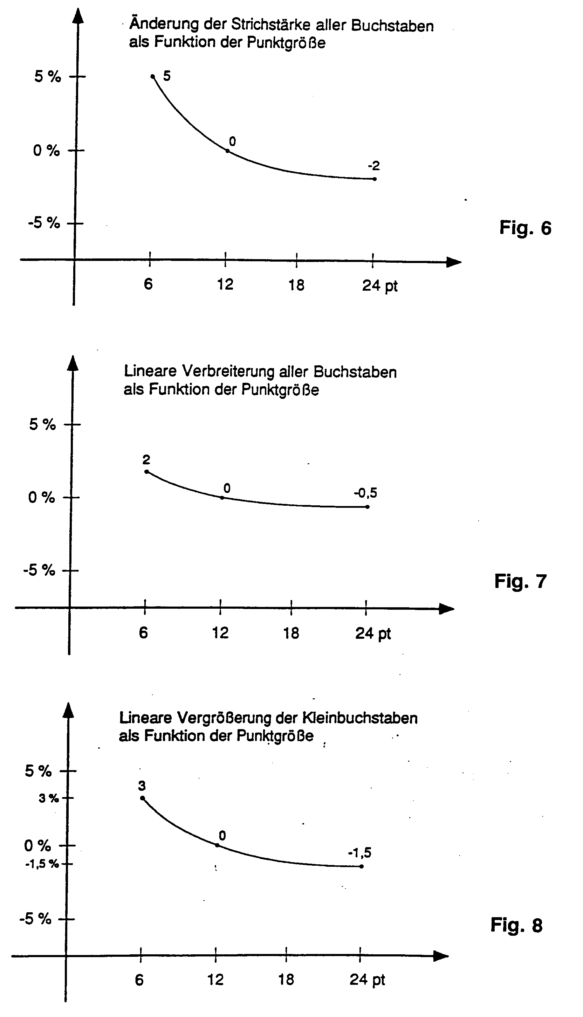

- Figur 6: Variation der Strichstärke als Funktion der Punktgröße bei dem erfindungsgemäßen Optischen Skalieren;
- Figur 7: Lineare Verbreiterung (Verschmälerung) der Buchstaben als Funktion der Punktgröße;
- Figur 8: Lineare Vergrößerung (Verkleinerung) der Kleinbuchstabenhöhe als Funktion der Punktgröße;

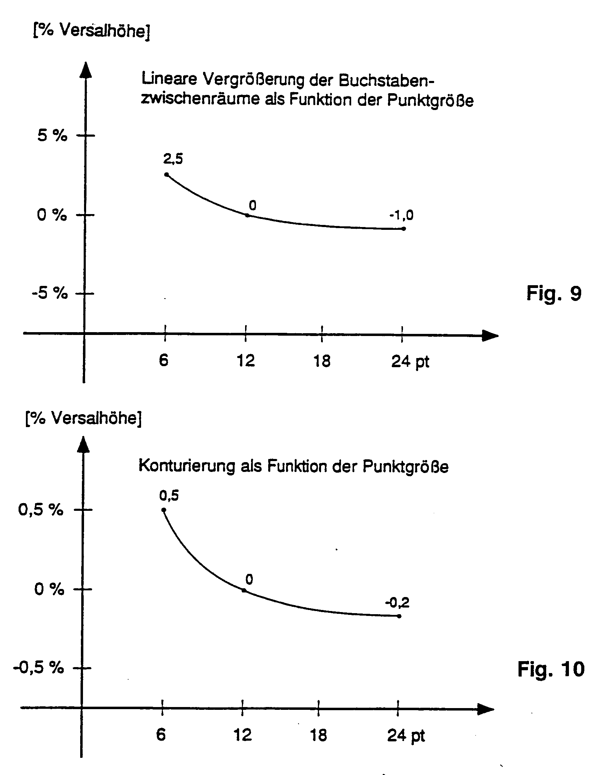

- Figur 9: Lineare Vergrößerung (Verkleinerung) der Buchstabenzwischenräume als Funktion der Punktgröße in Prozent der Großbuchstabenhöhe;
- Figur 10: Konturierungsstärke als Funktion der Punktgröße in Prozent der Großbuchstabenhöhe;

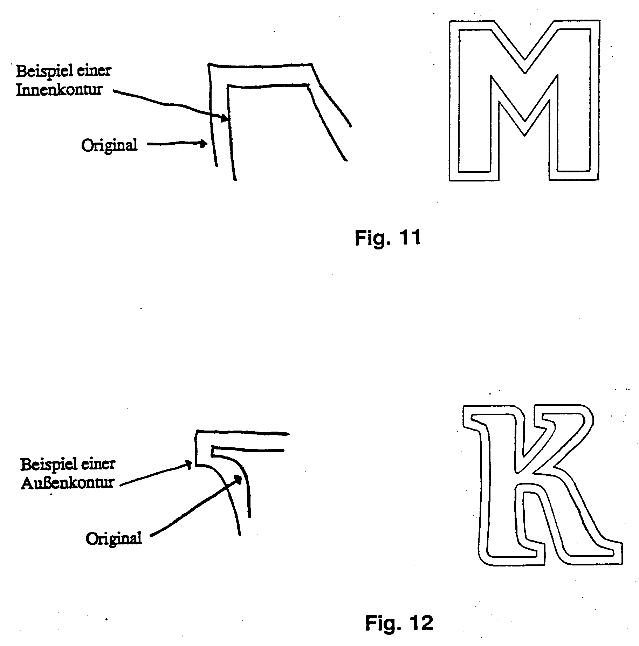

- Figur 11: Beispiel einer Innenkontur;
- Figur 12: Beispiel einer Außenkontur;

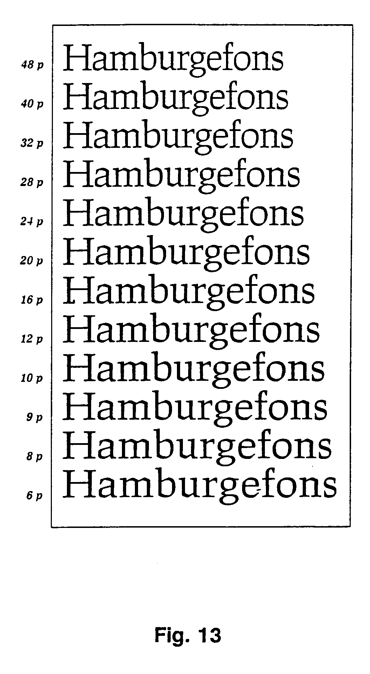

- Figur 13: erfindungsgemaß optisch skalierte Buchstaben nach linearer Rückskalierung nach Maßgabe der nominellen Punktgrößen;

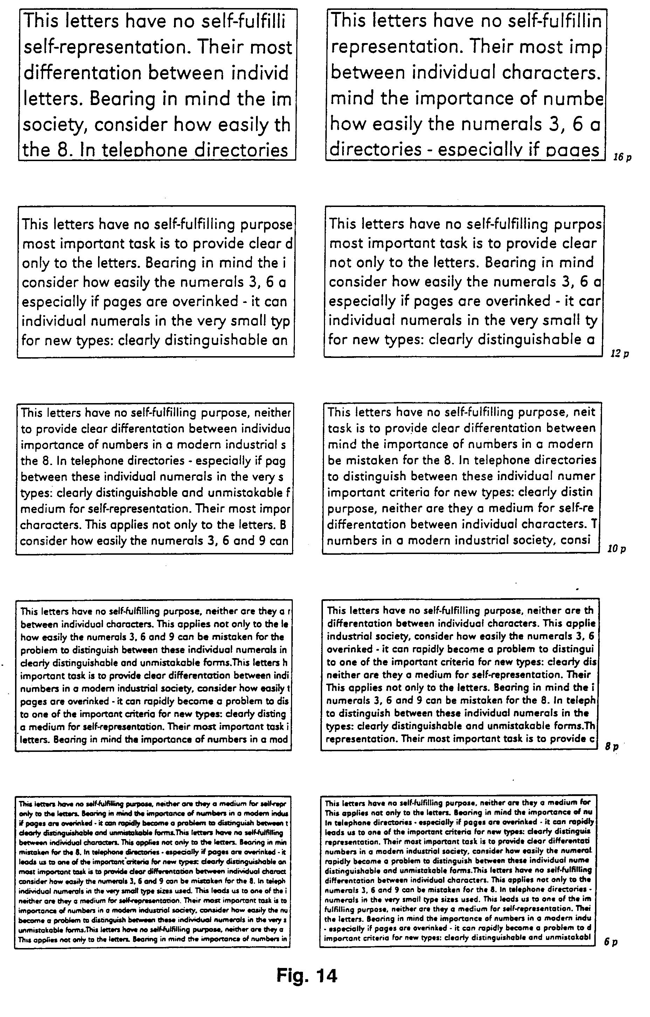

- Figur 14: Texte mit linear umskalierten Buchstaben in verschiedenen Punktgrößen (links) und mit dem erfindungsgemäßen Verfahren skalierte Punktgrößen (rechts);

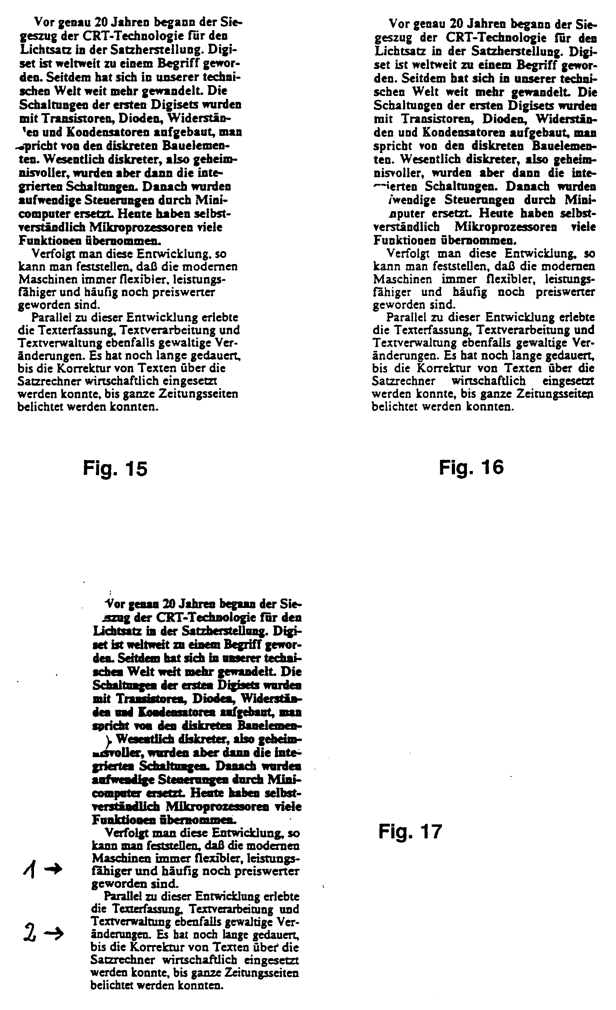

- Figur 15: Text in Flattersatz;
- Figur 16: Text in traditionellem Ausschluß durch Anpassung des Wortzwischenraums;
- Figur 17: Text mit konstantem Wortzwischenraum, bei dem der Ausgleich durch lineares Expandieren/Kondensieren der Buchstaben jedes Wortes erreicht ist;

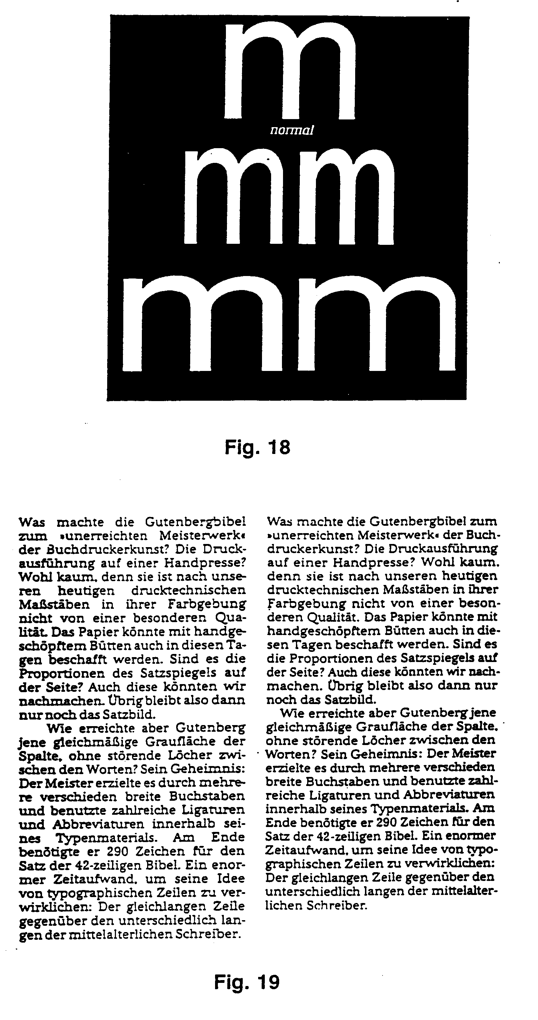

- Figur 18: Gegenüberstellung von linear expandierten/kondensierten (links) und typographisch richtig expandierten/kondensierten Buchstaben (rechts);
- Figur 19: Gegenüberstellung eines Satzes mit traditionellem Aufschluß (links) und eines Satzes mit typographisch richtig expandierten/kondensierten Buchstaben (rechts).

In Figur 1 sind Beispiele für die Definition der Außenlinien von Buchstaben durch diskrete Punkte dargestellt; eine ausführliche Beschreibung der gängigen Speicherung und Verfahren zur Buchstabendefinition sind in dem Buch "Digitale Schriften" von Peter Karow, Springer Verlag, Berlin-Heidelberg, 1992, zu finden.

Neben den Punkten zur Definition der Umrißlinie enthalten die Buchstaben sogenannte Instruktionen, die bei der Rasterung für die Ausgabe des Buchstabens beispielsweise auf einem Laserdrucker oder einem Bildschirm verwendet werden. Die Bedeutung und Verwendung der Instruktionen kann am Beispiel einer Kreislinie als Umrißlinie erläutert werden. Die Rasterung erfolgt dadurch, daß der Kreis durch ein gleichmäßiges Gitter unterlegt wird und alle Gitterkästchen geschwärzt werden, die zu mehr als 50% von der Kreisfläche überdeckt werden. Ein grobes Gitter hat wenige, ein feines Gitter viele Rasterpunkte zur Folge. Bei Laserdruckern wird die Schwärzung des Papiers durch digitale Steuerung dadurch erreicht, daß horizontal nebeneinanderliegende Rasterpunkte im Laufe der horizontalen Ablenkung des Laserstrahls aufeinanderfolgend belichtet (und damit geschwärzt werden) und untereinanderliegende Rasterpunkte in aufeinanderfolgende, nach unten um einen Punkt versetzte Laserlinien erzeugt werden. Der konstante Linienabstand entspricht der Höhe des Rasterpunktes, die konstante Taktfrequenz zwischen dem Ein- und Ausschalten für einen Punkt in einer Linie der Breite des Rasterpunktes. Dieser Prozeß läuft automatisch, meist in Rasterprozessoren (RIP = Raster Image Processor) in den Druckmaschinen ab, die die Umrißlinien in Rasterdarstellungen umrechnen. Anhand von Figur 2 ist leicht zu erkennen, daß auch bei gleichem Rastergitter und gleicher Umrißlinie verschiedene Ergebnisse entstehen, wenn man beide leicht gegeneinander verschiebt. Bei der Rasterung von Buchstaben sollten solche Zufälle vermieden werden, damit die Buchstaben einer Schrift möglichst gleichförmig gerastert werden. Nun treten in allen Schriften immer wiederkehrende Elemente auf, wie die geraden oder kurvigen Striche oder Balken. Sie können sowohl vertikal als auch horizontal auftreten und werden in dieser geometrischen Ausprägung am stärksten von zufälligen Rasterfehlern betroffen wie Figur 3 verdeutlicht. Sie können zufällig, da es nur ganze Rasterpunkte gibt, einen Rasterpunkt mehr oder weniger enthalten. Das kann zum Beispiel bei einer Darstellungsgröße von 10 pt (=2,5 mm Versalhöhe) einen Unterschied von 3:4 Rasterpunkten bedeuten, was etwa 30%, also einem Übergang von einer normalen zu einer halbfetten Schrift entspricht. Um derartige Rasterfehler zu vermeiden, sind die Hersteller von digital gesteuerten Laserdruckern dazu übergegangen, die Rasterung von Schrift intelligenter vorzunehmen. Dazu werden die Buchstabendaten jedes Buchstaben zusätzlich mit Instruktionen versehen. Das sind zusätzliche Informationen für die Rasterung, die eine intelligente Ausführung der Rasterung gestatten. Instruktionen werden auch als "hints" oder "Schalter" bezeichnet. Sie enthalten zunächst eine Kennung für die Art der Instruktion, z.B. Balken; eine Übersicht über die gängigen Arten von Instruktionen geben die Figuren 4 und 5. Zusätzlich enthält die Instruktion Information darüber, wo sich das Element, beispielsweise der Balken befindet und wie breit er ist. Verschiedene Instruktionen enthalten unter Umständen verschiedene Informationen zur Steuerung der Rasterung. Eine Instruktion bewirkt, daß die wichtigen beschreibenden Elemente, wie in Figur 5 aufgeführt, einer Schrift in homogener Weise gerastert werden. Zur näheren Erläuterung kann ein Balken, ein gerader senkrechter Abstrich (wie z.B. beim I) betrachtet werden. Mit Hilfe der Balken-Instruktion stehen die Teile des Umrisses automatisch zur Verfügung, die die linke und rechte Begrenzung bilden. Um unglückliche Zufälle beim Rastern zu vermeiden, wird nun der linke Rand des I-Balkens auf die nächstgelegene Gitterlinie des Rasters verschoben. Das wird durch eine X-Verschiebung bewirkt, die auf alle Koordinaten der Umrißlinie angewendet wird. Also tritt noch keine Formveränderung des Buchstabens ein. Der rechte Rand wird dann auf die Gitterlinie geschoben, die um eine bestimmte Zahl von Gitterpunkten rechts vom linken Rand liegt. Diese feste Zahl wird vorher aus der Art der Instruktion allgemein für die ganze Schrift bestimmt. Dabei geht man von der mittleren Stärke des beschreibenden Elements, im vorliegenden Fall der mittleren Balkendicke aus, und ermittelt durch Aufrunden die bestmögliche Anzahl von Rasterpunkten für die Darstellung der Balkendicke. Auf diese Weise kann es zu einer Formveränderung des I derart kommen, daß das I nach der Verschiebung des rechten Randes eine etwas dünnere oder dickere Balkenstärke hat. Zum Beispiel wird im Fall einer Strichstärke von 3.5 Rasterpunkten auf 4 Rasterpunkte gerundet und entsprechend die Kontur des I-Balkens um 0.5/3.5 = 14% verdickt. Jedenfalls wird eine solche Balkenstärke erreicht, die Zufallseffekte beim nachfolgenden Rastern automatisch vermeidet und die im Einklang mit den übrigen Balkenstärken der Schrift steht. Bei dieser Formveränderung wird darauf geachtet, daß sie möglichst gering ist, im Falle des I werden nur die Teile des Umrisses in X-Richtung verschoben, die rechts vom rechten Balkenrand liegen. Das Vorsehen der Instruktionen und diese Verfahrensweise bewirken also, daß man Balken oder auch andere Buchstabenelemente erzwungenermaßen entweder verdicken oder verdünnen kann, oder diese Elemente (wie den Balken) kontrolliert, z.B. insgesamt nach links oder rechts rücken kann. Diese Verfahrensweise, die eine einheitliche Rasterung der Elemente in den Ausgabegeräten ermöglicht, wird auch als "Intelligent Font Scaling" bezeichnet. Sie ist also ursprünglich zur Vermeidung von zufälligen Rasterungen für die niedrigen Auflösungen von Bildschirmen und Laserdruckern erfunden worden.

Erfindungsgemäß werden nun die Instruktionen nicht zur Vermeidung von Rasterfehlern bei niedriger Auflösung - dabei kommt es auf gezielte Verdickung oder Verdünnungen als ganzzahlige Vielfache von Rasterpunkten bzw. auf gezielte Verschiebungen von Teilen eines Buchstabens an - angewendet, sondern auf die willkürlich feingestufte Verdickung/Verdünnung bei hochauflösenden Geräten wie den Lichtsetzmaschinen.

Eine Verdickung beispielsweise des Kleinbuchstabens b (siehe Figur 1) erfolgt derart, daß in zwei Schritten zunächst die beiden senkrechten Balken (linker Balken, rechte Rundung) und dann die beiden waagerechten Elemente (oberer Bogen und unterer Bogen) bearbeitet werden. Beide Schritte laufen voneinander unabhängig ab. Der erste Schrit besteht aus folgendem Vorgehen: mit Hilfe der vier Balkeninstruktionen (zwei absolute Grenzen - (1) und (3) - und zwei relative Grenzen (2) und (4)) werden alle Kontrolpunkte, die links von Grenze (1) liegen, festgehalten. Auf die rechts der Grenze (2) liegenden Kontrollpunkte wird in x-Richtung das Verdickungsmaß addiert. Auf die Kontrollpunkte mit x-Koordinaten zwischen Grenze (1) und (2) wird das Verdickungsmaß linear interpolierend addiert, bei (1) mit Null, dann linear wachsend, bis bei (2) voll addiert wird. Damit ist der linke Balken verdickt. Die rechte Rundung wird ebenso bearbeitet. Links von Grenze (3) werden die x-Koordinaten festgehalten, zwischen (3) und (4) wird das Verdickungsmaß linear interpolierend addiert, rechts von (4) voll addiert. Analog werden in y-Richtung die beiden Bögen bearbeitet.

Eine Verdünnung kann ganz analog mit einem Verdünnungsmaß durch Substraktion erreicht werden.

Das Expandieren des Buchstabens b erfolgt zunächst durch bloßes Anwenden eiens x-Faktors auf alle x-Koordinaten. Dabei werden beim b auch der Balken und die Rundung um diesen Faktor breiter (dicker). Doch mit Hilfe der alten Angaben für die Balkengrenzen (bevor der Faktor angewendet worden ist) kann die ursprüngliche Strichstärke und damit ein Verdünnungsmaß automatisch ermittelt werden.

Dann wird die Grenze (1) und alles links davon liegende festgehalten. Die Grenze (2) wird um das Verdünnungsmaß nach links geschoben, zwischen (1) und (2) wird linear interpolierend verschoben, und rechts von (2) wird ebenfalls linear interpolierend so nach links verschoben, daß in der Nähe von (2) das Verdünnungsmaß voll addiert wird und auf der Mitte zwischen (2) und (3) auf Null abfällt. Analog wird für die Rundung anhand der alten Grenzen (3) und (4) ein Verdünnungsmaß ermittelt und wie oben angewendet.

Eine Kondensierung wird ähnlich ausgeglichen durch die Ermittlung und Verarbeitung eines Verdickungsmaßes in x-Richtung.

Die Instruktionen werden erfindungsgemäß zum kontinuierlichen Verdicken und Verdünnen der Strichstärke der Buchstaben bei der Ausgabe auf hochauflösenden Ausgabegeräten wie Lichtsetzmaschinen (Auflösung typisch 2400 lpi) verwendet. Bei der Anwendung des erfindungsgemäßen Verfahrens wird ausgehend von einer einzigen Master-Schrift, die in einer mittleren Punktgröße von beispielsweise 12 pt vorliegt, jeder Buchstabe auf die gewünschte Punktgröße mit einem Faktor linear umskaliert, und anschließend werden die Instruktionen verwendet, um die Strichstärke des Buchstabens kontinuierlich, mit einer ersten vorgegebenen Abhängigkeit von dem Faktor zu verändern.

Die erste vorgegebene Abhängigkeit ist in Figur 6 dargestellt, die die prozentuale Änderung der Strichstärke als Funktion der Punktgröße, auf die umskaliert wird, zeigt. Die Strichstärke wird bei Übergang zu kleinen Punktgrößen verstärkt, in diesem Ausführungsbeispiel wird die Strichstärke beim Übergang auf die Punktgröße 6 pt um 5 % erhöht, während sie beim Übergang zu sehr großen Buchstaben der Größe 24 pt um 2 % erniedrigt wird.

In einer bevorzugten Ausführungsform der Erfindung wird ferner die Breite der umskalierten Buchstaben in einer zweiten vorgegebenen Abhängigkeit von dem Umskalierungsfaktor variiert, wobei die Breite bei Übergang zu kleineren Punktgrößen erhöht und bei Übergang zu größeren Punktgrößen erniedrigt wird. In Figur 7 ist ein Beispiel für die zweite vorgegebene Abhängigkeit dargestellt, wobei die prozentuale lineare Verbreiterung aller Buchstaben als Funktion der Punktgröße gezeigt ist. Bei Übergang zu der kleinen Punktgröße 6 pt werden die Buchstaben sämtlich um 2 % verbreitert, während sie bei Übergang zu sehr großen Buchstaben von 24 pt um 0,5 % verschmälert werden.

Ferner wird die Höhe der Kleinbuchstaben in einer dritten vorgegebenen Abhängigkeit von dem Faktor variiert, wobei die Höhe bei Übergang zu kleinen Punktgrößen vergrößert und bei Übergang zu großen Punktgrößen verringert wird. Figur 8 zeigt ein Beispiel für die dritte vorgegebene Abhängigkeit, nämlich die prozentuale Vergrößerung der Kleinbuchstaben als Funktion der Punktgröße, auf die umskaliert wird. Ausgehend von der mittleren Punktgröße 12 pt werden die Kleinbuchstaben nach linearer Umskalierung auf die Puntkgröße 6 pt in ihrer Höhe um 3% vergrößert, und beim Umskalieren auf sehr große Buchstaben von 24 pt wird die Höhe der Kleinbuchstaben um 1,5% reduziert.

Figur 9 zeigt beispielhaft eine vierte vorgegebene Abhängigkeit, welche die Veränderung der Buchstabenzwischenräume im Prozent der Großbuchstabenhöhe als Funktion der Punktgröße angibt. Ausgehend von einer Design-Schriftgröße von 12 pt werden die Buchstabenzwischenräume bei Umskalierung auf eine Schriftgröße von 6 pt um 2,5 % der Großbuchstabenhöhe vergrößert und bei Übergang auf die Schriftgröße 24 pt um 1 % der Großbuchstabenhöhe reduziert.

In einer bevorzugten Ausführungsform der Erfindung werden die Buchstaben nach ihrer Umskalierung mit einer verstärkten Außenkontur versehen, die mit gleichmäßiger Stärke um die Außenkontur des umskalierten Buchstabens gelegt wird, wie in Figur 12 dargestellt. Die Stärke der Konturierung wird mit einer fünften vorgegebenen Abhängigkeit von der Punktgröße, auf die umskaliert wird, bestimmt. Ein Beispiel für die fünfte vorgegebene Abhängigkeit der Konturstärke von der Punktgröße ist in Figur 10 dargestellt, wobei die Stärke der Konturierung in Prozent der Großbuchstabenhöhe angegeben ist und positive Werte eine Verstärkung der Außenkontur, wie in Figur 12 dargestellt, und negative Werte eine Verstärkung der Innenkontur, wie in Figur 11 dargestellt, bedeuten.

Figur 13 zeigt mit dem erfindungsgemäßen Verfahren zur optischen Skalierung gewonnene Buchstaben in verschiedenen Punktgrößen, nachdem diese mit dem Kehrwert des linearen Umskalierungsfaktors zum Vergleich rückskaliert wurden. Die Zeile mit der 28 pt-Garnitur ist in normaler Größe gedruckt, die Zeile in 48 pt ist mit dem Faktor 28:48 = 0,583 verkleinert, die Zeile in 6 p mit dem Faktor 28:6 = 4,667 vergrößert. Es ist deutlich erkennbar, daß die kleine Schrift in 6 pt weiter und breiter ist und größere Strichstärken aufweist. Diese optische Skalierung bewirkt, daß auch kleine Schriften angenehm und gut lesbar bleiben, wie anhand von Figur 14 erkennbar ist, wo linear umskalierte Texte in verschiedenen Punktgrößen auf der linken Seite den entsprechenden Texten, die mit dem erfindungsgemäßen Verfahren automatisch optisch skaliert sind, gegenübergestellt sind. Insbesondere die kleinen Punktgrößen, wie etwa 6 pt, bleiben besser lesbar. Dies ist insbesondere wichtig, wenn Texte mehrfach kopiert oder per Telefax übermittelt und in ihrer Qualität beeinträchtigt werden. In diesen Fällen sind die optisch skalierten Texte wesentlich besser lesbar und den traditionell linear umskalierten eindeutig überlegen.

Die Figuren 15 bis 19 dienen zur Erläuterung des erfindungsgemäßen Expandierens/Kondensierens unter Verwendung der Instruktionen. Figur 15 zeigt eine Textspalte ohne Randausgleich und Figur 16 eine Textspalte, die mit traditionellem Ausschluß gesetzt ist, indem jeweils die Wortzwischenräume passend zum Randausgleich vergrößert sind. Figur 17 zeigt den Satz einer Textspalte, bei der die Wortzwischenräume konstant sind und der Ausgleich der Zeilenlänge durch lineares Expandieren/Kondensieren der Buchstaben erreicht wurde. Dadurch wirken einige Textstellen ungewollt hervorgehoben oder gesperrt (1) oder ungewollt nebensächlich (2). Die Wirkungsweise des typographisch richtigen Kondensierens/Expandierens gegenüber dem linearen ist in Figur 18 dargestellt. Der Buchstabe m ist auf der linken Seite in traditioneller Weise einfach linear verschmälert bzw. verbreitert gegenüber einer typographisch richtigen Expandierung auf der rechten Seite, wo die Strichstärke mit Hilfe der Instruktionen konstant gehalten ist und auf diese Weise beim Verbreitern/Verschmälern nur die Innenräume der Buchstaben verbreitert oder verschmälert werden. Indem ausgehend von einer einzigen Master-Schrift in dem erfindungsgemäßen Verfahren die Buchstaben expandiert/kondensiert werden, läßt sich eine überlegene Satztechnik erreichen. Dies wird aus Figur 19 deutlich, wo in der linken Textspalte mit traditionellem Ausschluß durch Verbreiterung der Wortzwischenräume gesetzt wurde und auf der rechten Seite die Buchstaben typographisch richtig expandiert/kondensiert wurden, um einen Randausgleich zu erreichen. Man erkennt, daß im Gegensatz zu dem in Figur 17 gezeigten linearen Expandieren/Kondensieren keine ungewollt "betonten" oder "nebensächlichen" Textstellen auftreten.

## Patentansprüche

1. Verfahren zum Ausgeben von Schrift auf hochauflösenden Ausgabegeräten, wie insbesondere Lichtsatzmaschinen, welche eine Rechnereinheit, einen Zwischenspeicher für die auszugebenden Schriftdaten und eine Ausgabeeinheit, die die aus dem Zwischenspeicher übernommenen Daten direkt auf ein Vervielfältigungsmedium überträgt, aufweisen, wobei die Rechnereinheit eine digital gespeicherte Schrift vor der Weitergabe an den Zwischenspeicher nach einem Verfahren optisch skaliert, bei dem
- eine einzige Master-Schrift in einer digitalisierten Konturkodierung gewählt wird, bei der jeder Buchstabe mit einer Mehrzahl seine Kontur festlegenden diskreten Kontrollpunkten und zusätzlich mit Instruktionen, wie sie für das "Intelligent Font Scaling" vorgeschrieben sind, versehen ist, und bei dem
- die Master-Schrift mit einem Faktor auf die gewünschte Punktgröße umskaliert wird,
**dadurch gekennzeichnet,**
- daß die Instruktionen verwendet werden, um die Strichstärke der mit dem Faktor linear umskalierten Buchstaben in einer ersten vorgegebenen Abhängigkeit von dem Faktor kontinuierlich zu variieren, wobei die Strichstärke für Faktoren kleiner eins um einen durch die vorgegebene Abhängigkeit vorgegebenen Prozentsatz erhöht und für Faktoren größer eins um einen durch die vorgegebene Abhängigkeit vorgegebenen Prozentsatz verringert wird.

2. Verfahren nach Anspruch 1, **dadurch gekennzeichnet,** daß ausgehend von einer Master-Schrift in der Größe 12 pt die Strichstärke bei Umskalierung auf eine Schriftgröße von 6 pt um etwa 5% verstärkt und bei einer Umskalierung auf eine Schriftgröße von 24 pt um etwa 2% abgeschwächt wird.

3. Verfahren nach einem der vorhergehenden Ansprüche, **dadurch gekennzeichnet,** daß die Breite der linear umskalierten Buchstaben in einer zweiten vorgegebenen Abhängigkeit von dem Faktor variiert wird, wobei die Breite bei Faktoren kleiner 1 erhöht und bei Faktoren größer 1 erniedrigt wird, und daß die Höhe der Kleinbuchstaben in einer dritten vorgegebenen Abhängigkeit von dem Faktor variiert wird, wobei die Höhe bei Faktoren kleiner 1 vergrößert und bei Faktoren größer 1 verringert wird.

4. Verfahren nach Anspruch 3, **dadurch gekennzeichnet,** daß ausgehend von einer Master-Schrift in Größe 12 pt bei linearer Umskalierung auf eine Schriftgröße von 6 pt die Breite der Buchstaben um etwa 15% erhöht und bei Umskalierung auf eine Schriftgröße von 24 pt etwa 1% erniedrigt wird, und daß die Buchstabenhöhe der Kleinbuchstaben bei Umskalierung auf eine Schriftgröße von 6 pt um bis zu 15% erhöht und bei einer Umskalierung auf eine Schriftgröße von 24 pt bis zu 1% verringert wird.

5. Verfahren nach einem der vorhergehenden Ansprüche, **dadurch gekennzeichnet,** daß die Buchstabenzwischenräume der linear umskalierten Schrift bei Faktoren kleiner 1 um einen prozentualen Anteil der Großbuchstabenhöhe verbreitert und bei Faktoren kleiner 1 um einen prozentualen Anteil der Großbuchstabenhöhe verkürzt werden.

6. Verfahren nach Anspruch 5, **dadurch gekennzeichnet,** daß ausgehend von einer Master-Schrift in der Größer 12 pt die Buchstabenzwischenräume um etwa 6% der Großbuchstabenhöhe bei Umskalierung auf eine Schriftgröße von 6 pt verbreitert und um etwa 4% der Großbuchstabenhöhe bei Umskalierung auf die Schriftgröße 24 pt verkürzt werden.

7. Verfahren nach einem der vorhergehenden Ansprüche, **dadurch gekennzeichnet,** daß die Buchstaben der linear umskalierten Schrift bei Umskalierung mit Faktoren kleiner 1 mit einer gleichmäßigen Außenkonturierung versehen werden, deren Stärke in einer vierten vorgegebenen Abhängigkeit von der Großbuchstabenhöhe steht, und daß bei Umskalierung mit Faktoren größer 1 eine gleichmäßige Innenkonturierung vorgenommen wird, deren Stärke in einer fünften vorgegebenen Abhängigkeit von der Großbuchstabenhöhe besteht.

8. Verfahren nach Anspruch 7, **dadurch gekennzeichnet,** daß ausgehend von einer Master-Schrift in der Größe 12 pt die umskalierten Buchstaben bei Umwandlung auf die Schriftgröße 6 pt mit einer gleichmäßig dicken Außenkontur von etwa 0,5% der Großbuchstabenhöhe versehen, und daß bei Umskalierung auf die Schriftgröße 24 pt eine gleichmäßig starke Innenkontur mit einer Dicke von etwa 0,2% der Großbuchstabenhöhe vorgenommen wird.

9. Verfahren zum Ausgeben von Schrift auf hochauflösenden Ausgabegeräten, wie insbesondere Lichtsatzmaschinen, welche eine Rechnereinheit, einen Zwischenspeicher für die auszugebenden Schriftdaten und eine Ausgabeeinheit, die die aus dem Zwischenspeicher übernommenen Daten direkt auf ein Vervielfältigungsmedium überträgt, aufweisen, wobei die Rechnereinheit eine digital gespeicherte Schrift vor der Weitergabe an den Zwischenspeicher nach einem Verfahren expandiert und kondensiert, bei dem
- eine einzige Master-Schrift in einer digitalisierten Konturkodierung gewählt wird, bei der jeder Buchstabe mit einer Mehrzahl seine Kontur festlegenden diskreten Kontrollpunkten und zusätzlich mit Instruktionen, wie sie für das "Intelligent Font Scaling" vorgeschrieben sind, versehen ist, und bei dem
- die Master-Schrift mit einem Faktor auf die gewünschte Punktgröße umskaliert wird,
**dadurch gekennzeichnet,**
daß die Instruktionen verwendet werden, um die Strichstärke beim linearen Expandieren oder Kondensieren der Buchstaben konstant zu halten und auf diese Weise nur die Innenräume zu verbreitern oder zu verschmälern.

## Claims

1. A method for generating the output of fonts on high resolution output devices, in particular phototypesetters, which device comprises a processor unit, an intermediate storage for font data to be output and an output unit which transfers data received from the intermediate storage directly onto a multiplication medium, wherein the processor unit optically scales a digitally stored font before sending it to the intermediate storage according to a procedure in which:
a single master font in a digitized outline coding is selected in which each letter is provided with a plurality of discrete control points determining its contour and additionally with instructions as prescribed for the "Intelligent Font Scaling", and
the master font is re-scaled with a factor to the desired point size,
characterized in that,
the instructions are utilized so as to steadily vary the stroke width of the letters linearily re-scaled by said factor, said stroke width variation being in a first pre-determined dependency on said factor, wherein the stroke width is, for factors less than 1, increased by a percentage which is pre-determined by said pre-determined dependency, and is, for factors larger than 1, decreased by a percentage which is pre-determined by said pre-determined dependency.

2. A method as in Claim 1, characterized in that, when starting from a master font in the size 12 pt, the stroke width is, upon re-scaling to a font size of 6 pt, thickened by approximately 5%, and upon a re-scaling to a font size of 24 pt is thinned by approximately 2%.

3. A method as in one of the preceding claims, characterized in that the width of the linearily re-scaled letters is varied in a second pre-determined dependency on said factor, wherein the width is increased for factors smaller than 1 and is decreased for factors larger than 1, and that the height of lower case letters is varied in a third pre-determined dependency, wherein the height is increased for factors smaller than 1 and decreased for factors larger than 1.

4. A method as in Claim 3, characterized in that, when starting from a master font in the size 12 pt, the width of letters is increased by approximately 15% upon linear re-scaling to a font size of 6 pt, and is reduced approximately by 1% upon re-scaling to a font size of 24 pt, and that the letter height of lower case letters is increased up to 15% upon rescaling to a font size of 6 pt, and is reduced up to 1% upon re-scaling to a font size of 24 pt.

5. A method as in one of the preceding claims, characterized in that the letter spaces of the linearily re-scaled font are broadened by a percentage of the capital letter height for factors smaller than 1, and are shortened by a percentage of the capital letter height for factors smaller than 1.

6. A method according to Claim 5, characterized in that starting from a master font in the size 12 pt, the letter spaces are broadened by approximately 6% of the capital letter height upon re-scaling to a font size of 6 pt, and are shortened by approximately 4% of the capital letter height upon re-scaling to a 24 pt font size.

7. A method as in one of the preceding claims, characterized in that the letters of the lineary re-scaled font are, upon re-scaling with a factor less than 1, provided with an extra uniform outer contour, the width of which is in a fourth pre-determined dependency on said capital letter height, and that, upon re-scaling with factors less than 1, a uniform inner contour is added, the width of which is in a fifth pre-determined dependency on said capital letter height.

8. A method as in Claim 7, characterized in that, when starting from a master font in the size 12 pt, the linearily re-scaled letters are provided with an outer contour of a uniform width of approximately 0.5% of the capital letter height upon re-scaling to a font size 6 pt, and that upon re-scaling to a font size 24 pt a uniformly wide inner contour having a thickness of approximately 0.2% of said capital letter height is applied.

9. A method for generating the output of character fonts on high resolution output devices, in particular phototypesetters, which device comprises a processor unit, an intermediate storage for font data to be output and an output unit which transfers data received from the intermediate storage directly onto a multiplication medium, wherein the processor unit expands and condenses a digitally stored font before sending it to the intermediate storage according to a procedure in which:
a single master font in a digitized outline coding is selected in which each letter is provided with a plurality of discrete control points determining its contour and additionally with instructions, as prescribed for the "Intelligent Font Scaling", and
the master font is re-scaled with a factor to the desired point size,
characterized in that,
the instructions are utilized to hold the letter stroke width constant during the expansion or condensation of letters and in this way only to broaden or narrow the inner counters.

## Revendications

1. Procédé permettant la production de polices de caractères sur des organes de sortie à haute résolution, notamment des photocomposeuses, pourvus d'un processeur, d'une mémoire tampon pour stocker les données des polices de caractères à produire ainsi que d'une unité de sortie, qui transfère les données issues de la mémoire tampon directement sur un support de reproduction, le processeur mettant à l'échelle optiquement la police de caractères stockées numériquement avant de la transférer à la mémoire tampon par un procédé selon lequel
- une seule matrice de police de caractères, représentée par un codage numérique de ses contours, est sélectionnée, chaque caractère comportant plusieurs points discrets de contrôle définissant les contours du caractère ainsi que des instructions supplémentaires, telles qu'elles sont prescrites pour la "mise à l'échelle intelligente", et selon lequel
- la matrice de police de caractères est mise à l'échelle du corps souhaité par application d'un facteur,
caractérisé par
- l'utilisation des instructions pour générer une variation continue de l'épaisseur de trait des caractères obtenue par la mise à l'échelle par le facteur linéaire, variation qui dépend du facteur selon une première relation pré-définie, l'épaisseur de trait étant augmentée selon le pourcentage résultant de la relation pré-définie pour des facteur inférieurs à un et étant réduite selon le pourcentage résultant de la relation pré-définie pour des facteur supérieurs à un.

2. Procédé selon revendication 1, caractérisé en ce que, partant d'une matrice de police de caractères de corps 12 pt, l'épaisseur de trait des caractères est augmenté d'environ 5% lors d'une mise à l'échelle à un corps de 6 pt et que l'épaisseur de trait des caractères est réduite d'environ 2% lors d'une mise à l'échelle à un corps de 24 pt.

3. Procédé selon une des revendications précédentes, caractérisé par une variation de la largeur des caractères obtenue par une mise à l'échelle linéaire, variation qui dépend du facteur de mise à l'échelle selon une deuxième relation prédéfinie, la largeur étant réduite pour des facteurs inférieurs à un et augmentée pour des facteurs supérieurs à un, et caractérisé par une variation de la hauteur des caractères minuscules obtenue par une mise à l'échelle linéaire, variation qui dépend du facteur de mise à l'échelle selon une troisième relation pré-définie, la hauteur étant augmentée pour des facteurs inférieurs à un et réduite pour des facteurs supérieurs à un.

4. Procédé selon revendication 3, caractérisé en ce que, partant d'une matrice de police de caractères de 12 pt, la largeur des caractères est augmentée d'environ 15% lors d'une mise à l'échelle linéaire à 6 pt et que la largeur des caractères est réduite d'environ 1% lors d'une mise à l'échelle à 24 pt, et que la hauteur des caractères minuscules est augmenté d'environ 15% lors d'une mise à l'échelle à un corps de 6 pt et que la hauteur des caractères minuscules est réduite jusqu'à 1% lors d'une mise à l'échelle à un corps de 24 pt.

5. Procédé selon une des revendications précédentes, caractérisé en ce que les espaces entre les lettres obtenus lors d'une mise à l'échelle linéaire de la police de caractères sont élargis par un pourcentage relatif à la hauteur des caractères pour des facteurs inférieurs à un, et réduits par un pourcentage relatif à la hauteur des caractères pour des facteurs inférieurs à un.

6. Procédé selon revendication 5, caractérisé en ce que, partant d'une matrice de police de caractères de corps 12 pt, les espaces entre les lettres sont augmentés d'environ 6% de la hauteur des caractères majuscules lors d'une mise à l'échelle à un corps de 6 pt, et réduits d'environ 4% de la hauteur des caractères majuscules lors d'une mise à l'échelle à un corps de 24 pt.

7. Procédé selon une des revendications précédentes, caractérisé par la génération d'un contour extérieur uniforme autour des caractères de la police de caractères lors d'une mise à l'échelle linéaire avec des facteurs inférieurs à un, contour dont l'épaisseur dépend de la hauteur des caractères majuscules selon une quatrième relation pré-définie, et par la génération d'un contour intérieur uniforme à l'intérieur des caractères de la police de caractères lors d'une mise à l'échelle linéaire avec des facteurs supérieurs à un, contour dont l'épaisseur dépend de la hauteur des caractères majuscules selon une cinquième relation pré-définie.

8. Procédé selon revendication 7, caractérisé en ce que, partant d'une matrice de police de caractères de corps 12 pt, un contour extérieur uniforme d'une épaisseur d'environ 0,5% de la hauteur des caractères majuscules est généré autour des caractères lors d'une mise à l'échelle à un corps de 6 pt, et qu'un contour intérieur uniforme d'une épaisseur d'environ 0,2% de la hauteur des caractères majuscules est généré à l'intérieur des caractères lors d'une mise à l'échelle à un corps de 24 pt.

9. Procédé permettant la production de polices de caractères sur des organes de sortie à haute résolution, notamment des photocomposeuses, pourvus d'un processeur, d'une mémoire tampon pour stocker les données des polices de caractères à produire ainsi que d'une unité de sortie, qui transfère les données issues de la mémoire tampon directement sur un support de reproduction, le processeur condensant ou élargissant la police de caractères stockée numériquement avant de la transférer à la mémoire tampon par le procédé selon lequel
- une seule matrice de police de caractères, représentée par un codage numérique de ses contours, sera sélectionnée, chaque caractère comportant plusieurs points discrets de contrôle définissant les contours du caractère ainsi que des instructions supplémentaires, telles qu'elles sont prescrites pour la " mise à l'échelle intelligente ", et selon lequel
- la matrice de police de caractères sera mise à l'échelle par rapport au corps souhaité par application d'un facteur,
caractérisé par
- l'utilisation des instructions pour garder l'épaisseur de trait des caractères constant lorsqu'ils sont condensés ou élargis de façon linéaire, ne condensant ou élargissant ainsi que les espaces intérieurs des caractères.
